# EUROPEAN PATENT APPLICATION

(11) **EP 1 050 508 A1**
(43) Date of publication of application: **08.11.2000**
(21) Application number: 00108955.6
(22) Date of filing: 27.04.2000
(51) Int. Cl.: B67C 7/00

(54) **Transfer wheel with grippers**

(30) Priority: 28.04.1999 IT BO990200
(71) Applicant: Muvitec S.r.l, 47852 Coriano (Italy) (IT)
(72) Inventor: Vicini, Oliviero, 40125 Bologna (IT)
(74) Representative: Eccetto, Mauro

(57) **Abstract**

An apparatus (4) for equally spacing containers (2), in particular bottles (2), made of plastic material, supplied by conveying means (1), and each suspended by a collar (3a); the apparatus (4) being characterized by having a rotary disk (5) having a number of integral gripping members (7); each of the gripping members (7) being activated by fixed cam means (12) and having a rocker arm (8) and a respective gripping arm (17); and the gripping members (7) removing individual containers (2) off the conveying means (1) and feeding the containers, equally spaced with a predetermined spacing (P), to a user machine.

## Description

The present invention relates to an apparatus for equally spacing plastic containers.

Though specific reference is made to bottles in the following description, the teachings of the present invention obviously also apply, with obvious provisions, to any container made of plastic material, in particular, PET.

In bottling technology, or at any rate in the processing of plastic bottles, apparatuses are commonly used for equally spacing bottles coming off conveyors on which the bottles are supported by a hold collar beneath the mouth of the bottle.

Bottles made of PET or any other plastic material are normally conveyed by means of overhead conveying devices, on which the bottles are suspended by the collar on the neck and conveyed by means of air jets.

Overhead conveying devices are used to connect successive processing stations, such as blowing, rinsing and filling machines.

In this type of application, the bottles, traveling in single file in an upright position, are fed from the output of the overhead conveyor onto a chain conveyor, on which the bottom of each bottle rests; and the chain conveyor belt, powered by an appropriate drive so as to be synchronized with the speed of the downstream equipment, feeds the bottles to a pair of superimposed screws, by which the bottles are equally spaced before being fed to a conventional carousel conveyor.

Taken as a whole, the above devices are extremely expensive, are mechanically complicated, and involve switching from one conveying system in which the bottles are suspended by the collar, to another in which the bottom of each bottle rests on a supporting surface. Moreover, by the time they reach the screws, the bottles are often dented - due to deformation on the overhead conveyor or upstream processing equipment - thus resulting in jamming of the screws and a fall in production through failure of the screws to supply the downstream machine. In which case, operator assistance is required to free the damaged incoming bottles and restart the screws.

Moreover, on this type of apparatus, the screws, transfer wheels and rails must be changed when dealing with bottles of different sizes.

To eliminate the aforementioned drawbacks, an apparatus for equally spacing PET bottles has been devised comprising:
- a rail for receiving the bottles from the output of an upstream conveyor, and on which the bottles are kept upright, are suspended by the collar, and substantially rest one behind the other in single file; and
- a carousel conveyor at the input of a machine downstream from the apparatus.

The carousel conveyor receives the bottles straight off the rail, is substantially circular, and has a number of contoured peripheral seats, which, as the carousel conveyor rotates about a central vertical axis, remove respective bottles, suspended by the collars, off the rail, and return them equally spaced a given distance apart.

While undoubtedly affording advantages over the prior state of the art, by eliminating the two screws, such an apparatus has the major drawback of the bottles possibly jamming between the carousel conveyor and the outer rail skirting the substantially circular edge of the conveyor, due to inevitable differences, for example, in neck dimensions.

This type of system, in fact, is highly sensitive to variations in the neck dimensions of bottles of different sizes and even bottles from different makers, even to the extent of the bottles jamming between the conveyor and the outer rail, both of which are made of steel.

In this case, too, therefore, operator assistance is required to restore operation of the carousel conveyor and respective rail by removing and destroying the damaged bottles causing the jam.

Moreover, this type of apparatus must also be retooled to accommodate different bottle neck sizes.

It is an object of the present invention, therefore, to provide an apparatus for equally spacing plastic containers, designed to eliminate the aforementioned drawbacks.

In other words, it is an object of the present invention to provide an apparatus enabling the elimination of screws, chain conveyors and associated mechanisms, and specific carousel conveyors and rails for different bottle sizes. The apparatus according to the present invention therefore provides for conveying bottles suspended permanently by the collar, thus eliminating the risk of jamming alongside changes in bottle size, and enabling the processing of different bottle sizes with no need for retooling.

According to the present invention, there is provided an apparatus for equally spacing containers, in particular bottles, made of plastic material, supplied by conveying means, and each suspended by a collar; the apparatus being characterized by comprising a rotary disk having a number of integral gripping members; each of the gripping members being activated by fixed cam means and comprising a rocker arm and a respective gripping arm; and the gripping members removing individual containers off the conveying means and feeding the containers, equally spaced with a predetermined spacing, to a user machine.

A non-limiting embodiment of the present invention will be described by way of example with reference to the accompanying drawings, in which:

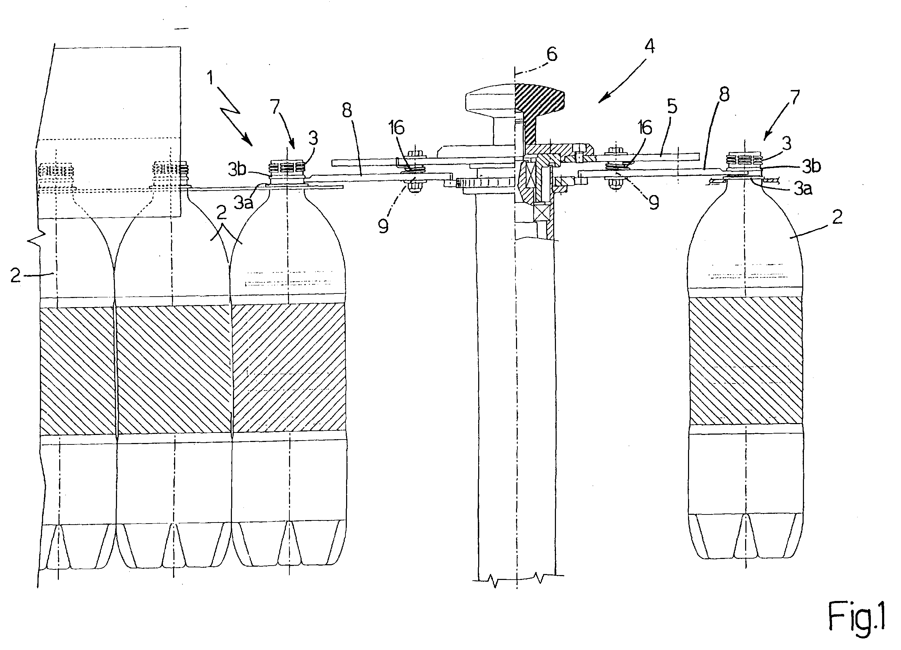

Figure 1 shows a front section of the apparatus according to the present invention;
Figure 2 shows a plan view of the Figure 1 apparatus equally spacing containers having first dimensional characteristics;
Figure 3 shows a plan view of the Figure 1 apparatus equally spacing containers having second dimensional characteristics.

Number 1 in the accompanying drawings indicates as a whole an overhead conveyor for conveying containers 2 - in particular bottles 2 - in single file, in a substantially upright position, and each suspended by a collar 3a projecting from the neck 3. Conveyor 1 is normally an air type.

For the purpose of the present description, bottles 2 may be made of PET or any other plastic material.

Bottles 2 must be fed to a machine (not shown), e.g. a rinsing or filling machine, downstream from conveyor 1, must be equally spaced beforehand with a given spacing, and must be synchronized with the speed of the downstream machine (not shown).

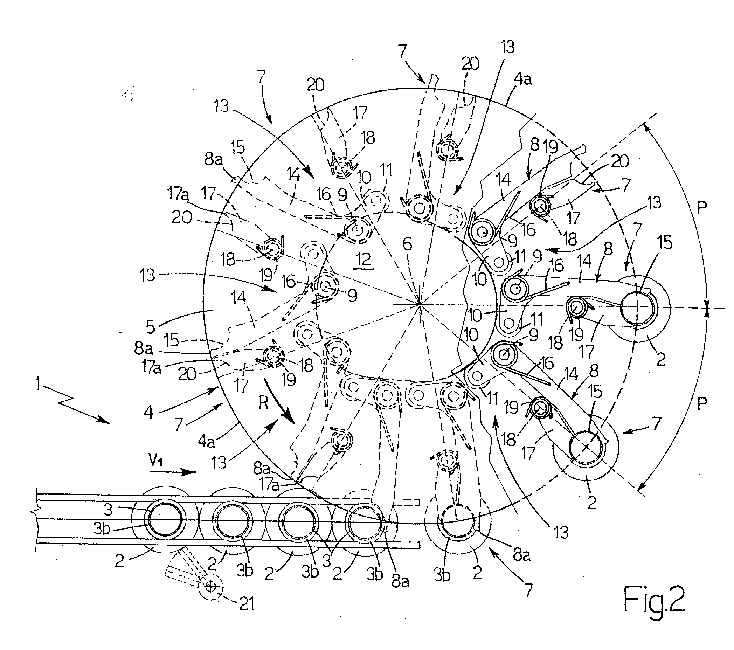

The apparatus 4 for equally spacing bottles 2 comprises a powered disk 5 rotating continuously in an anticlockwise direction R, in Figure 2, about a fixed central axis 6 perpendicular to the Figure 2 plane and to the traveling direction V₁ of bottles 2 on overhead conveyor 1.

Disk 5 supports a number of gripping members 7 equally spaced with a spacing P (Figure 2) about axis 6 and connected to disk 5 via the interposition of respective rocking arms 8, each of which is hinged to disk 5 to oscillate, with respect to disk 5, about an axis 9 parallel to axis 6. Each rocker arm 8 comprises a first arm 10 extending towards central axis 6 and fitted on the free end with a tappet roller 11 connected to a fixed cam 12 defining, with roller 11, a device 13 for controlling the angular position of rocker arm 8 about respective axis 9.

Each rocker arm 8 also comprises a second arm 14 extending outwards with respect to respective axis 9 and disk 5, and which is fitted on the free end with a respective substantially arc-shaped gripping seat 15 for receiving, as described clearly later on, at least a portion of neck 3 of a respective bottle 2. Each rocker arm 8 is subjected to the action of a return spring 16 located at the axis 9 of rotation of rocker arm 8.

Each rocker arm 8 corresponds with a respective substantially fixed gripping arm 17 hinged about a respective axis 18 and also carried by disk 5. Axes 18 are located further outwards on disk 5 than axes 9, so that gripping arms 17 are shorter than corresponding rocker arms 8. Like rocker arms 8, each arm 17 comprises, at respective axis 18, a respective spring 19 for imparting a certain amount of elasticity to the slightest rotation of arm 17 about axis 18. At the free end, each arm 17 has a respective substantially arc-shaped gripping seat 20, which mates with the similar seat 15 on the free end of rocker arm 8 to form said gripping member 7 for gripping neck 3 of bottle 2.

As stated, bottles 2, which are fed to a machine (not shown) downstream from apparatus 4, must be equally spaced and synchronized with the speed of the downstream machine (not shown).

This is done inventively by rocker arm 8, which is located at the front in the rotation direction, and which is inserted between necks 3 of the incoming bottles 2, and, retains a bottle 2, during the closing movement of the gripping member, so as to enclose neck 3 in a "pincer" grip against respective gripping arm 17, so that bottle 2 is suspended by a respective collar 3b. In other words, at the end of the gripping operations, the neck 3 of any bottle 2 is gripped elastically by gripping member 7 between seat 15 of rocker arm 8 and seat 20 of arm 17.

As stated, in the course of said "pincer" movement about respective axis 9, rocker arm 8 is guided by fixed cam 12, the profile of which defines both the opening and closing positions of the gripping member, and the law of motion governing closing of the gripping member; which law of motion is devised to switch as smoothly as possible from an initial spacing, substantially equal to the diameter of bottles 2, to the predetermined spacing P (Figure 2) of the downstream machine (not shown).

For each gripping member 7, cam 12 is designed to retain rocker arm 8, while the force required to close each gripping member 7 is imparted by the two springs 16, 19, which also provide for a certain amount of elasticity of the system as bottles 2 are transferred from apparatus 4 to the downstream machine (not shown).

Gripping members 7 and cam 12 are designed to retain bottles 2 of different sizes, with a diameter ranging, for example, from 55 to 110 mm, and with necks 3 ranging from 28 to 45 mm.

As shown in Figure 2, in the fully-open position, gripping arm 17 of a first gripping member 7 rests with its back against the back of rocking arm 8 of a second gripping member 7 following the first. Arm 17 is so formed as to be offset radially with respect to respective rocker arm 8, and has, on the free end, a respective bevel 17a facing seat 20. Similarly, each rocker arm 8 has a bevel 8a, which, together with said conformation of arm 17, provides for releasing the rocker arm from positions of unstable equilibrium, which may occur - when a new train of bottles 2 is released by a retaining device 21 - in the event contact between the first bottle 2 and rocker arm 8 occurs inadvertently at, as opposed to before or after, bevel 8a. In which case, rocker arm 8 is forced by contact with the neck of the first bottle 2 to open further and is so released from said position of unstable equilibrium.

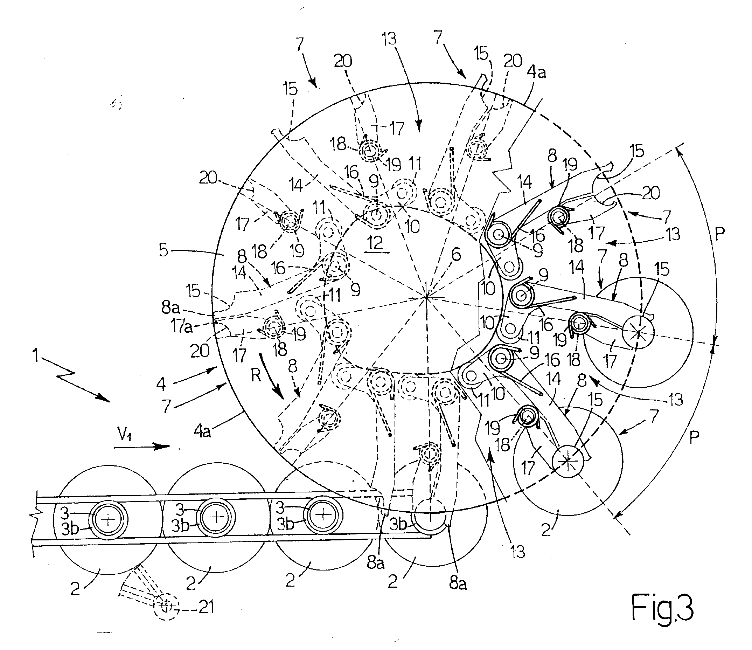

As shown in Figures 2 and 3, apparatus 4 according to the present invention provides for equally spacing bottles 2 of different sizes the same distance P apart, with no need to retool apparatus 4.

## Claims

1. An apparatus (4) for equally spacing containers (2), in particular bottles (2), made of plastic material, supplied by conveying means (1), and each suspended by a collar (3a); the apparatus (4) being characterized by comprising a rotary disk (5) having a number of integral gripping members (7); each of said gripping members (7) being activated by fixed cam means (12) and comprising a rocker arm (8) and a respective gripping arm (17); and said gripping members (7) removing individual containers (2) off said conveying means (1) and feeding the containers, equally spaced with a predetermined spacing (P), to a user machine.

2. An apparatus (4) as claimed in Claim 1, wherein said rocker arm (8) and said gripping arm (17) of each gripping member (7) comprise respective elastic means (16, 19) at respective axes of rotation (9, 18).

3. An apparatus (4) as claimed in Claim 1, wherein said rocker arm (8) and said gripping arm (17) define, at their free ends, respective seats (15, 20) for receiving the neck (3) of said container (2).

4. An apparatus (4) as claimed in Claim 1, wherein the free ends of said rocker arm (8) and said gripping arm (17) are offset with respect to each other; and wherein said free ends have respective bevels (8a, 17a) for rectifying a position of unstable equilibrium in the event of said free ends inadvertently contacting the neck (3) of a container (2).
